(19) Europäisches Patentamt
European Patent Office
Office européen des brevets

(11) Veröffentlichungsnummer: **0 380 801**
**A2**

(12) # EUROPÄISCHE PATENTANMELDUNG

(21) Anmeldenummer: **89123381.9**

(51) Int. Cl.⁵: **G01M 11/00**

(22) Anmeldetag: **18.12.89**

(30) Priorität: **01.02.89 SU 4688479**

(43) Veröffentlichungstag der Anmeldung:
**08.08.90 Patentblatt 90/32**

(84) Benannte Vertragsstaaten:
**AT BE CH DE FR GB LI NL SE**

(71) Anmelder: **LENINGRADSKOE OTDELENIE TSENTRALNOGO NAUCHNO-ISSLEDO-VATELSKOGO INSTITUTA SVYAZI (LONIIS)**
**ulitsa Varshavskaya, 11**
**Leningrad(SU)**

(72) Erfinder: **Bukhshtab, Mikhail Alexandrovich**
**ulitsa Novoselov 41, kv. 21**
**Leningrad(SU)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **Verfahren zur Messung optischer Verluste in Lichtleitfasern im reflektierten Licht.**

(57) Das Verfahren betrifft das Gebiet der Faseroptik und kann bei der Messung von kleinen optischen Verlusten in Faserlichtleitern verschiedener Typen angewendet werden.

Das Verfahren weist folgende Schritte auf:

Einkoppeln eines Sende-Lichtimpulses in den zu messenden Lichtleiter über einen Leerlauflichtleiter (4), dessen Länge $l_x$ mindestens die Hälfte der Länge der eingestellten Modenverteilung für diesen Typ von Lichtleitern beträgt; Messen der Energie oder der maximalen Leistung $N_0$ des von der Ausgangsstirnseite des Leerlauflichtleiters (4) reflektierten Impulses; Verbinden des Leerlauflichtleiters mit dem zu messenden Lichtleiter (5); Messen der Energie oder der maximalen Leistung N des von der Ausgangsstirnseite des zu messenden Lichtleiters (5) reflektierten Impulses; und Ermittlung der optischen Verluste $\mu$ pro Längeneinheit in dem zu messenden Lichtleiter.

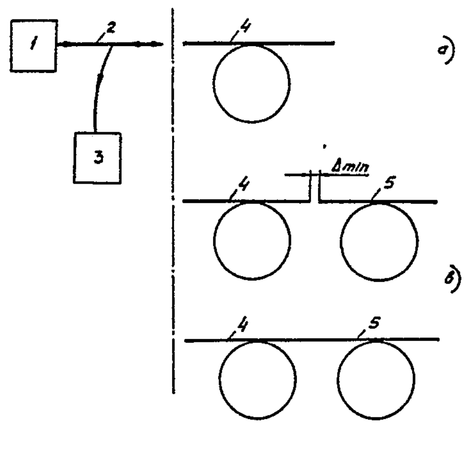


FIG.1

EP 0 380 801 A2

Xerox Copy Centre

# Verfahren zur Messung optischer Verluste in Lichtleitfasern im reflektierten Licht

## ANWENDUNGSGEBIET DER ERFINDUNG

Die Erfindung bezieht sich auf das Gebiet der Faseroptik und kann zur Messung des Strahlungsschwächungskoeffizienten in Lichtleitfasern verschiedener Typen angewendet werden.

## CHARAKTERISTIK DER BEKANNTEN TECHNISCHEN LÖSUNGEN

Es ist ein Verfahren zur Messung der optischen Gesamtverluste bei in Faserlichtleitern reflektiertem Licht bekannt, welches auf der Einkopplung eines kurzen Strahlungsimpulses in den Lichtleiter der Länge 1g auf der Messung jeweils der maximalen Leistung von getrennt zu beobachtenden Impulsen der von der Eingangsstirnseite des Licht leiters reflektierten Lichtleistung $N_{eing}$ unter Anwendung der Immersion $N_{sp}$ eines an seiner Ausgangsstirnseite angeordneten hochreflektierenden Spiegels, der Abtrennung eines kurzen Abschnitts der Länge $l_k$ des Lichtleiters an der Seite der Impulseinkopplung, der Messung der maximalen Leistung $N_\epsilon$ des Signals, das von der Eingangsstirnseite und von einem an der Ausgangsstirnseite des kurzen Lichtleiters angeordneten Spiegels reflektiert ist, sowie auf der Ermittlung optischer Strahlungsimpulse an dem zu untersuchenden Lichtleiter beruht, die durch den Schwächungskoeffizienten $\mu$ nach der verdoppelten Längendifferenz 2 $(l_g - l_k)$ nach der Formel

$$\exp\left[-2\mu(l_g - l_k)\right] = \frac{N_\epsilon - N_{eing}}{N_{sp}}$$

charakterisiert werden (s. Hellerich, Pulsereflection method for transmission - less measurement of optical fibers, Electronics letters, 1976, Vol. 12, N 1, p 92-93).

Der Nachteil des bekannten Verfahrens besteht darin, daß der zu untersuchende Lichtleiter wegen der Abtrennung des kurzen Abschnitts $l_k$ verletzt wird.

Es ist ebenfalls ein Verfahren zur Ermittlung optischer Verluste in Leitleitfasern bei reflektiertem Licht bekannt, das in der Einführung eines Strahlungs-Sendeimpulses in den zu messenden Lichtleiter über einen Leerlauflichtleiter, dessen Länge die Hälfte der Länge der eingestellten Modenverteilung für diesen Typ von Lichtleitern ausmacht, in der Messung der Energie $N_1$ des von der Ausgangsstirnseite des Leerlauflichtleiters reflektierten Impulses, der Messung der Energie $N_2$ des Impulses, der von dem mit einem minimalen Abstand voneinander angeordneten Leerlauflichtleiter und von der Eingangsstirnseite des zu untersuchenden Lichtleiters reflektiert ist, in der Messung der Energie $N_3$ des von der Ausgangsstirnseite des zu messenden Lichtleiters reflektierten Impulses sowie in der Ermittlung von optischen Verlusten $\mu$ pro Längeneinheit des zu messenden Lichtleiters nach den Ergebnissen aller drei Messungen besteht (s. die Anmeldung Nr. 4204727 (UdSSR); Beschluß über die Erteilung des Urheberscheins vom 30. 5. 88). Dieses Verfahren kommt seinem technischen Wesen nach dem anmeldungsgemäßen Verfahren am nächsten.

Der Nachteil des bekannten Verfahrens besteht darin, daß es erforderlich ist, die Gesamtleistung der Strahlungsimpulse von den angekoppelten Lichtleiterstirnseiten, und zwischen der Ausgangsstirnseite des Lichtleiters und der Eingangsstirnseite des zu messenden Lichtleiters zu messen. In Systemen mit einer hohen Zeitauflösung, die in optischen Reflektometern angewendet werden, wo das Meßsystem auf jeden Strahlungsimpuls, der von verschiedenen Stirnseiten reflektiert ist, reagiert, kann solche Integration nicht durchgeführt werden. Deswegen können die Messungen der optischen Verluste nach dem bekannten Verfahren nicht durchgeführt werden oder sie sind mit großen Meßfehlern verbunden. Außerdem sei angemerkt, daß beim Verbinden der Lichtleiter ohne Luftspalt der Impuls mit der Energie $N_2$ fehlt, und es können ebenfalls keine Messungen nach dem bekannten Verfahren im reflektierten Licht durchgeführt werden.

Die Aufgabe der Erfindung besteht darin, die Meßgenauig keit zu erhöhen und eine Messung mit einem schnell ansprechenden Meßsystem zu ermöglichen, wobei eine Kopplung der Lichtleiter ohne Luftspalt durchführbar sein soll.

## DARLEGUNG DES WESENS DER ERFINDUNG

Diese Aufgabe wird dadurch gelöst, daß ein Sende-Lichtimpuls in den zu messenden Lichtleiter über einen Leerlauflichtleiter eingekoppelt wird, dessen Länge mindestens die Hälfte der eingestellten Modenverteilung für diesen Lichtleitertyp ausmacht, wobei die optischen Verluste $\mu$ pro Längeneinheit des zu messenden Lichtleiters gemäß der von den Stirnseiten des Lichtleiters reflektierten Strahlung ermittelt werden. Erfindungsgemäß wird vorgeschlagen, nach der Einführung des Strahlungsimpulses in den Leerlauflichtleiter die Energie oder die Gesamtleistung $N_0$ des von der Ausgangsstirnseite des Leerlauflichtleiters reflektierten Impulses entweder mit einem minimalen Luftspalt in den zu messenden Lichtleiter einzukoppeln oder den Leerlauf- und den zu messenden Faserlichtleiter ohne Luftspalt zu verbinden; und die Energie bzw. die maximale Leistung N des von der Ausgangsstirnseite des zu messenden Lichtleiters reflektierten Impulses zu messen und die optischen Verluste in dem zu messenden Lichtleiter nach der Beziehung

$\mu = (2 \ln \tau + \ln N_0 - \ln N)/ 21$

zu ermitteln; worin 1 die Länge des zu messenden Lichtleiters und $\tau$ der Durchlaßkoeffizient der gekoppelten Lichtleiterstirnseiten sind, wobei $\tau_{max} = 1$ bei der Verbindung der Lichtleiter ohne Luftspalt und $\tau_{min} = 2n/(n^2 + 1)$ bei der Verbindung der Lichtleiter, deren Gruppen-Brechungsindes gleich n ist, mit einem minimalen Luftspalt sind.

Eine Vergleichsanalyse der anmeldungsgemäßen Lösung mit dem Prototyp zeigt, daß sich das anmeldungsgemäße Verfahren von dem bekannten Verfahren dadurch unterscheidet, daß man nach der Einkopplung des Strahlungsimpulses in den Leerlauflichtleiter die Energie oder die Gesamtleistung $N_0$ des von der Ausgangsstirnseite des Leerlauflichtleiters reflektierten Impulses mißt, den Leerlauflichtleiter mit dem zu messenden Lichtleiter mit einem minimalen Luftspalt koppelt oder ohne Luftspalt verbindet und die Energie bzw. die maximale Leistung N des von der Ausgangsstirnseite des zu messenden Lichtleiters reflektierten Impulses mißt.

Das erfindungsgemäße Verfahren enthält folgende zusammenhängende Verfahrensschritten:

1. Man führt einen Sende-Lichtimpuls in den Leerlauflichtleiter mit einer Länge $l_x$ ein.
2. Man mißt die Energie oder die maximale Leistung $N_0$ des von seiner Ausgangsstirnseite reflektierten Impulses.
3. Man koppelt den Leerlauflichtleiter mit dem zu messenden Faserlichtleiter unter Einhalten eines minimalen Luftspalts oder man verbindet diese ohne Luftspalt.
4. Man mißt die Energie bzw. die maximale Leistung N des von der Ausgangsstirnseite des zu messenden Lichtleiters reflektierten Impulses.
5. Man ermittelt die optischen Verluste $\mu$ in dem zu messenden Lichtleiter nach der Beziehung:

$$\mu = \frac{2 \ln 2n - 2 \ln(n^2+1) + \ln N_0 - \ln N}{21} \qquad (1)$$

beim Ankoppeln der Lichtleiter, deren Gruppen-Brechungsindex gleich n ist, mit einem minimalen Luftspalt oder nach der Beziehung:

$$\mu = \frac{\ln N_0 - \ln N}{21} \qquad (2)$$

beim Verbinden der Lichtleiter ohne Luftspalt.

Der Vorteil des vorgeschlagenen Verfahrens zur Messung von optischen Verlusten in Lichtleiterfasern bei reflektiertem Licht besteht darin, daß sich die zu messenden optischen Verluste schon nach zwei und nicht erst nach drei Meßergebnissen der Signale, die von den Stirnseiten der Lichtleiter reflektiert sind ermitteln lassen, wodurch der Prozeß der Durchführung der Messungen vereinfacht wird und die Möglichkeit geschaffen wird, die optischen Verluste auch mittels Vorrichtungen, die auf die maximale Leistung reagieren, und nicht auf die Energie der Strahlungsimpulse (z. B. optische Reflektometer) zu messen. Jedoch können die Messungen nach dem anmeldungsgemäßen Verfahren im Gegenteil zu den Reflektoren in einem wesentlich breiteren dynamischen Bereich durch die um einige Größenordnung höhere Leistung des reflektierten Signals als die eines zerstreuten Signals durchgeführt werden.

## KURZBESCHREIBUNG DER ZEICHNUNGSFIGUR

Die Erfindung wird anhand grafischer Darstellungen näher erläutert.

Die Figur zeigt die Vorrichtung zur Durchführung des Meßverfahrens. Die Vorrichtung enthält eine Strahlungsquelle 1, einen Strahlteiler 2 zur Teilung der einfallenden und ref lektierten Strahlung, einen Empfänger 3, einen Leerlauflichtleiter 4 und einen zu messenden Lichtleiter 5.

## BEVORZUGTE AUSFÜHRUNGSFORM DER ERFINDUNG

Man führt einen Strahlungsimpuls (Impulse) der Strahlungsquelle 1 über den Strahlteiler 2 in einen Leerlauflichtleiter 4 ein. Nachdem man den Strahlteiler mit dem Leerlauflichtleiter (Ansicht "a") abgestimmt, d. h. deren Kerne und Umhüllungen axial angekoppelt hat, mißt man mittels des Empfängers 3 die Energie oder die maximale Leistung $\phi_{max}$ des von der Ausgangsstirnseite des Leerlauflichtleiters reflektierten Impulses. Das Signal des Empfängers $N_0$ ist in diesem Fall folgenderweise errechnet:

$$N_0 = x\phi\tau_{1,2}\cdot\tau_{2,4}\cdot\tau_{xp}(-\mu_x l_x)\rho \exp(-\mu_x l_x)\,\tau_{2,4}\,\tau_{2,3} = k\phi\tau_{1,2}\cdot\tau_{2,3}\cdot\tau^{2}_{2,4} \exp(-2\mu_x l_x)\rho, \quad (3)$$

worin $x$ ein Proportionalitätsfaktor ist, der die Empfindlichkeit des Empfängers berücksichtigt;
$\phi$ den Strom, die Leistung oder die Strahlungsenergie der Quelle angibt;
$\tau_{1,2}$ der Durchlaßkoeffizient des Lichtstroms der Quelle durch den Strahlteiler 2 ist;
$\tau_{2,4}$ den Durchlaßkoeffizienten der angekoppelten Stirnseiten des Strahlteilers 2 und des Leerlauflichtleiters 4 angibt;
$\mu_x$, $l_x$ jeweils der Schwächungsgrad und die Länge des Leerlauflichtleiters 4 sind;
$\rho$ den Reflexionsgrad der Stirnseite des zu messenden Lichtleiters angibt; und
$\tau_{2,3}$ der Durchlaßkoeffizient der Strahlung durch den Strahlteiler zum Empfänger 3 ist.

Nachdem der zu messende Lichtleiter 5 mit dem Leerlauflichtleiter 4 unter Einhaltung eines minimalen Luftspalts gekoppelt (Ansicht "b") oder die Eingangsstirnseite des zu messenden Lichtleiters mit der Ausgangsstirnseite des Leerlauflichtleiters verschweißt (verklebt) und die Meßvorrichtung für das Signal im Empfänger 3 so eingestellt wurde, daß der Empfänger nur auf die Impulse reagiert, die von der Ausgangsstirnseite des zu messenden Lichtleiters 5 reflektiert sind, mißt man das zweite Signal des Empfängers nach der Beziehung:

$$N = x\phi\tau_{1,2}\cdot\tau_{2,3}\cdot\tau^{2}_{2,4} \exp(-2\mu_x 2_x)\,\tau^2 \exp(-2\mu l)\rho, \quad (4)$$

worin $\mu_x$ der Schwächungsgrad und $l_x$ die Länge des zu messenden Lichtleiters sind; $\tau$ der Durchlaßkoeffizient der angekoppelten, angeschweißten oder zusammengeklebten Stirnseiten des Leerlauflichtleiters und des zu messenden Lichtleiters ist.

Bei einem Qualitätsverbinden der Lichtleiter (z. B. mittels moderner Anlagen der Firma "Fujinuza FSM-20") übersteigen die Verluste an der Verbindungsstelle sogar bei Einmodelichtleitern 0,02 dB nicht, d. h. daß der Durchlaßkoeffizient $\tau_{max}$ der Verbindungsstelle sehr genau gleich Eins ist (Genauigkeit ± 0,02). Beim Verbinden der Lichtleiter mit einem minimalen Luftspalt wird der Durchlaßkoeffizient in Übereinstimmung mit Fresnel-Formeln unter Berücksichtigung mehrfacher Reflexionen errechnet, und zwar:

$$\tau_{min} = (1-\rho)^2 \frac{1}{1-\rho^2} = \frac{1-\rho}{1+\rho} = \frac{2n}{n^2+1} \quad (5),$$

worin $\rho$ der Reflexionsgrad der einen Stirnseite des Lichtleiters, und
n der Gruppen-Brechungsindex seines Kerns ist. In Abhängigkeit von der Unbestimmtheit $\Delta\rho$ des Reflexionsgrades der Stirnseiten werden die Änderungen $\Delta\tau/\tau$ des Durchlaßkoeffizienten der gekoppelten Lichtleiter nach der Gleichung

$$\frac{\Delta\tau}{\tau} = \frac{\Delta\rho}{\rho} - \frac{\Delta\rho}{1+\rho} = -\frac{2\Delta\rho}{1-\rho}\ 2\leqq \pm\frac{2\rho}{\tau_{min}} \quad (6)$$

ermittelt.

Für Qualitätslichtleiter wird das Profil des Brechungsindexes mit einer Genauigkeit von $\Delta$ n = $\pm$ $1.10^{-3}$ gehalten; in diesem Fall ist die Unbestimmtheit des Reflexionsgrades der Lichtleiterstirnseite aus besonders reinem Quarzglas $\Delta\rho$ = 0,0025 x 0,0347718 = $1.10^{-4}$ und $\Delta\tau/\tau$ = $\pm$ $2.10^{-4}$, d. h. daß die Änderungen des Durchlaßkoeffizienten gegenüber dem Rechenwert vernachlässigbar niedrig sind, nämlich bei $\pm$ 0,001 dB liegen. Bei $\Delta$ n, das $\pm$ 0,01 erreicht, übertreffen die Änderungen $\Delta\frac{\tau}{\tau}$ $\pm$ 0,01 dB nicht. Deswegen kann man bei den Messungen optischer Verluste in dem zu messenden Lichtleiter, die 0,01 dB übersteigen, den Rechenwert des Durchlaßgrades der gekoppelten Lichtleiterstirnseiten in Übereinstimmung mit der Beziehung (5) verwenden.

In Übereinstimmung mit dem oben dargelegten kann man das Verhältnis der Ausdrücke (4) und (3) den zu suchenden Schwächungsgrad der Strahlung in dem zu messenden Lichtleiter nach der Beziehung

$$\frac{N}{N_o} = \tau^2 \exp^{2\mu l} \quad ; \quad \mu = \frac{2 \ln\tau + \ln N - \ln N}{2\,l} \qquad (7)$$

ermitteln.

Je nach Art der Verbindung des Leerlauflichtleiters mit dem zu messenden Lichtleiter, geht der Ausdruck über in die Formel für die Messungen ohne Luftspalt

$$\mu = \frac{\ln N_o - \ln N}{2l} \qquad (8)$$

und in die Formel für die Messungen mit einem Luftspalt

$$\mu = \frac{2\ln 2n + 2 \ln N_o - \ln N - \ln(n^2+1)}{2l} \qquad (9),$$

die für Mehrmodenlichtleiter mit einem legierten Quarzkern

$$\mu L \; [dB] = 10 \lg \frac{N_o}{N} - 0{,}32 \qquad (10)$$

gleich ist,

und für Einmodenlichtleiter mit einer legierten Umhüllung

$$\mu L \; [dB] = 10 \lg \frac{N_o}{N} - 0{,}3 \qquad (11).$$

beträgt.

Im Stand der Technik wurden die Gesamtenergiewerte der Impulse, die von der Ausgangsstirnseite des Leerlauflichtleiters, den Stirnseiten des Leerlauflichtleiters und des zu messenden Lichtleiters sowie von der Ausgangsstirnseite des zu messenden Lichtleiters reflektiert sind, nacheinander gemessen. Hier entsteht keine Unbestimmtheit wegen möglicher Änderungen des Reflexionsgrades der angekoppelten Stirnseiten des Leerlauflichtleiters und des zu messenden Lichtleiters, weil dessen Einfluß unmittelbar während des Meßvorgangs berücksichtigt werden kann; diese Messungen können aber nur in integrierenden, d. h. in nicht schnellwirkenden Systemen durchgeführt werden. Bei solchen Systemen kann das Registrierungssystem von weit verbreiteten optischen Reflektometern, in welchen die maximale Leistung der Impulse in praktisch jedem Punkt der Lichtleiter gemessen wird, nicht benutzt werden. Es können ebenfalls keine Messungen bei der Verbindung der Lichtleiter ohne Luftspalt durchgeführt werden.

Dagegen besteht der Vorteil des erfindungsgemäßen Verfahrens nicht nur in der Erweiterung des

dynamischen Meßbereichs und in der Möglichkeit, die Verluste durch Messung der Leistung der reflektierten Impulse zu ermitteln, sondern auch darin, daß es möglich ist, die Messungen sowohl bei der Verbindung von zwei Lichtleitern, und zwar eines Leerlauflichtleiters mit einem zu messenden Lichtleiter bei Einhaltung eines minimalen Luftspalts als auch bei einer Schmelzverbindung (beim Schweißen oder Verkleben der Lichtleiter) durchzuführen. Außerdem ist das vorgeschlagene Verfahren im Gegensatz zu Messungen durch eine reflektierte Streuung kein relatives sondern ein absolutes Meßverfahren. Dank den oben genannten Vorteilen kann das erfindungsgemäße Verfahren auf praktisch jedem Reflektometer, welcher zur Erforschung von Lichtleitern nach der rückwärts sich ausbreitenden Strahlung bestimmt ist, angewendet werden. Dabei ist der Meßteil der Vorrichtung zur Durchführung des Verfahrens analog dem Meßsystem eines Reflektometers, der zur Erforschung von Lichtleitern nach der rückwärts sich ausbreitenden Strahlung bestimmt ist, wegen der Möglichkeit, die Messungen aufgrund der maximalen Leistung der reflektierten Impulse durchzuführen.

## Ansprüche

Verfahren zur Messung optischer Verluste von Lichtleitfasern bei reflektiertem Licht, mit den Schritten:
Einkopplung eines Sende-Lichtimpulses in einen zu messenden Lichtleiter über einen Leerlauflichtleiter, dessen Länge $l_x$ mindestens die Hälfte der Länge der eingestellten Modenverteilung für diesen Typ von Lichtleitern beträgt, und
Ermittlung der optischen Verluste $\mu$ pro Längeneinheit des zu messenden Lichtleiters der von den Stirnseiten der Lichtleiter reflektierten Strahlung,
**dadurch gekennzeichnet,**
daß nach der Einkopplung des Lichtimpulses in den Leerlauflichtleiter die Energie oder die Gesamtleistung $N_0$ des von der Ausgangsstirnseite des Leerlauflichtleiters reflektierten Impulses entweder mit einem minimalen Luftspalt in dem zu messenden Lichtleiter eingekoppelt oder der Leerlauflichtleiter mit dem zu messenden Faserlichtleiter ohne Luftspalt verbunden wird;
die Energie bzw. die maximale Leistung N des von der Ausgangsstirnseite des zu messenden Lichtleiters reflektierten Impulses gemessen;
und die optischen Verluste $\mu$ pro Längeneinheit in dem zu messenden Lichtleiter nach folgender Beziehung ermittelt werden:

$$\mu = \frac{2\ln\tau + \ln N_o - \ln N}{2\,l},$$

worin l die Länge des zu messenden Lichtleiters und
$\tau$ der Durchlaßkoeffizient der gekoppelten Lichtleiterstirnseiten sind, welcher Durchlaßkoeffizient $\tau_{max} = 1$ bei der Verbindung der Lichtleiter ohne Luftspalt und
$\tau_{min} = 2n.(n^2 + 1)$ bei der Verbindung der Lichtleiter, deren Gruppen-Brechungsindex gleich n ist, mit einem minimalen Luftspalt betragen.

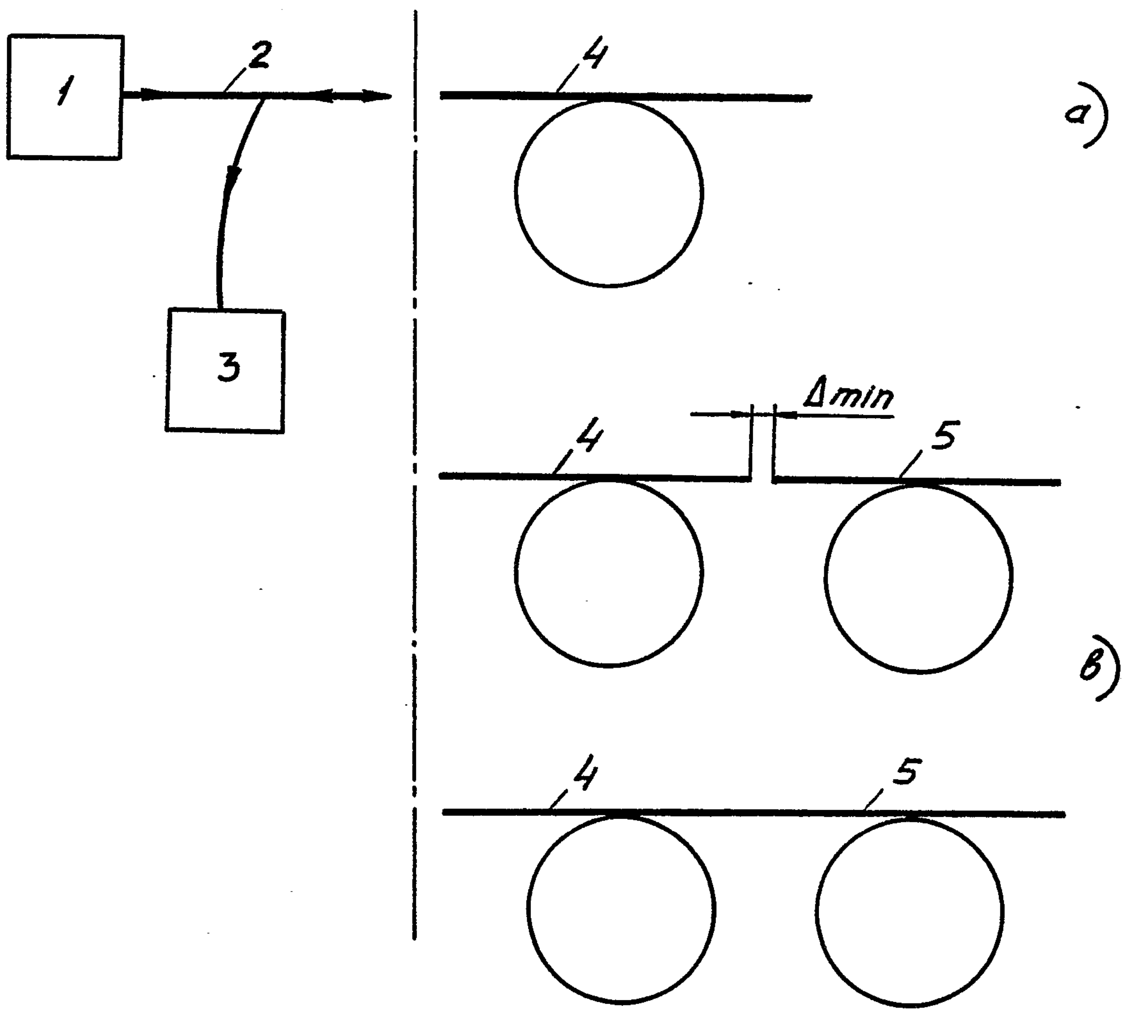


FIG.1